# EUROPEAN PATENT APPLICATION

(11) **EP 3 799 223 A1**
(43) Date of publication of application: **31.03.2021**
(21) Application number: 19200052.9
(22) Date of filing: 27.09.2019
(51) Int. Cl.: H01R 13/52

(54) **SEALING ARRANGEMENT FOR SEALING A PART WITH A SEALING SURFACE, METHOD OF SEALING A SEALING SURFACE OF A PART**

(71) Applicant: TE Connectivity Belgium BVBA, 8020 Oostkamp (BE)
(72) Inventor: VERVAET, Jorgen, 8020 Oostkamp (BE)
(74) Representative: Grünecker Patent- und Rechtsanwälte PartG mbB

(57) **Abstract**

The application shows a sealing arrangement (100) for sealing a part (200) with a sealing surface (210), in particular an aluminium surface, the sealing arrangement (100) comprising an adhesive member (10) and a seal contacting plate (20), wherein the seal contacting plate (20) is adapted to be sealingly attached to the sealing surface (210) by the adhesive member (10). The application further discloses a method of sealing a sealing surface (210) of a part (200), in particular an aluminium surface, comprising the step of applying a seal contacting plate (20) with an adhesive member (10) to the sealing surface (210).

## Description

The invention relates to a sealing arrangement for sealing a part with a sealing surface and a method of sealing a sealing surface of a part.

The part can, for example, be a housing made from aluminium to which a connector or a sensor is attached. When the connector is attached at the sealing surface with a seal, such a connection often does not withstand extended salt spray cycles. Liquid can then get into the interior of the housing and damage components therein.

It is an object of the invention to provide a solution that increases the level of protection.

According to the invention, this is achieved by a sealing arrangement for sealing a part with a sealing surface, in particular an aluminium surface, the sealing arrangement comprising an adhesive member and a seal contacting plate, wherein the seal contacting plate is adapted to be sealingly attached to the sealing surface by the adhesive member.

The invention further relates to a method of sealing a sealing surface of a part, in particular an aluminium surface, comprising the step of applying a seal contacting plate with an adhesive member to the sealing surface.

The solution according to the invention can be further improved by the following further developments and advantageous embodiments, which are independent of each other and can be combined arbitrarily, as desired.

In order to facilitate an easy application, the adhesive member can comprise a flexible carrier structure. The flexible carrier structure can comprise different materials, for example, paper, plastic, rubber or similar materials.

The flexible carrier structure can be planar. This can simplify the application and can result in a good sealing performance.

The adhesive member can comprise a double-sided adhesive tape. This can simplify the manufacturing process, as such double-sided adhesive tape can be readily available.

In an advantageous embodiment, the seal contacting plate is made from a corrosion resistant material. This can improve the resistance towards aggressive liquids like salt water. For example, the seal contacting plate can be made from stainless steel.

In an easy configuration, the seal contacting plate can comprise a sheet metal. The seal contacting plate can, for example, be cut or stamped from a sheet metal. The production of such a seal contacting plate can then be easy. In a further embodiment, the seal contacting plate can comprise a foil. Such a seal contacting plate can be more flexible than one with sheet metal.

The seal contacting plate can surround an opening. Through the opening, elements like connectors or sensors can protrude into the part. The seal contacting plate can have a closed frame structure to allow a sealing around the entire opening.

For a compact configuration, an adhesive surface of the adhesive member can face in a direction perpendicular to a plane of the opening. This applies, of course, when the adhesive member is attached to the seal contacting plate.

To improve the sealing performance, the adhesive member can be compressible. In particular, the adhesive member can be elastically compressible.

In a further advantageous embodiment, a sealing assembly comprises the sealing arrangement and the part with the sealing surface, wherein the sealing surface comprises cavities, wherein the adhesive member has a width that is greater than the cavities. The adhesive member can then cover the cavities in their entire width. The cavities can be casting voids that are formed when the cast part shrinks. The size of the cavities that is compared to the width of the adhesive member can, in particular, be a maximum size that is usually formed for certain casting conditions. In more advantageous embodiments, the width of the adhesive member is at least three, preferably five times the width of a cavity.

The sealing surface can surround an opening in order to allow access to an interior of the part and to seal the opening.

The adhesive member can be adhesively attached to the sealing surface in order to provide a good sealing performance.

The sealing surface can be made from aluminium or an aluminium alloy. The entire part can be made from aluminium or an aluminium alloy. This can reduce the weight.

In an advantageous embodiment, the adhesive member can be applied to the seal contacting plate before the seal contacting plate is applied to the sealing surface. This can simplify the assembly.

In an easy-to-perform method, the adhesive member is applied to a sheet metal and the seal contacting plate is cut from the sheet metal. In particular, the sheet metal and the adhesive member can be cut together. For example, the sheet metal can be applied to adhesive tape from which the seal contacting plate together with the adhesive member is then cut.

The invention will now be described in greater detail and in an exemplary manner using advantageous embodiments and with reference to the drawings. The described embodiments are only possible configurations in which, however, the individual features as described above can be provided independently of one another, or can be omitted.

In the figures:
- Fig. 1: shows a schematic perspective view of a sealing arrangement next to a part with the sealing surface;
- Fig. 2: shows a schematic perspective view of the sealing arrangement of Fig. 1 attached to the part;
- Fig. 3: shows a schematic cross section through the sealing arrangement and a part together with a connector;
- Fig. 4: shows a schematic cross section through an adhesive member.

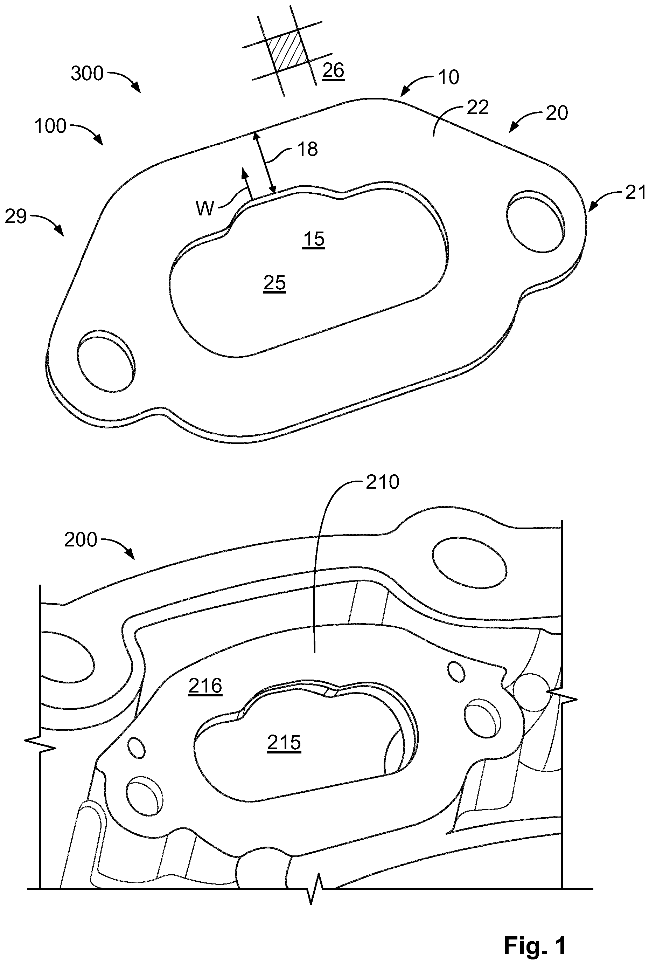

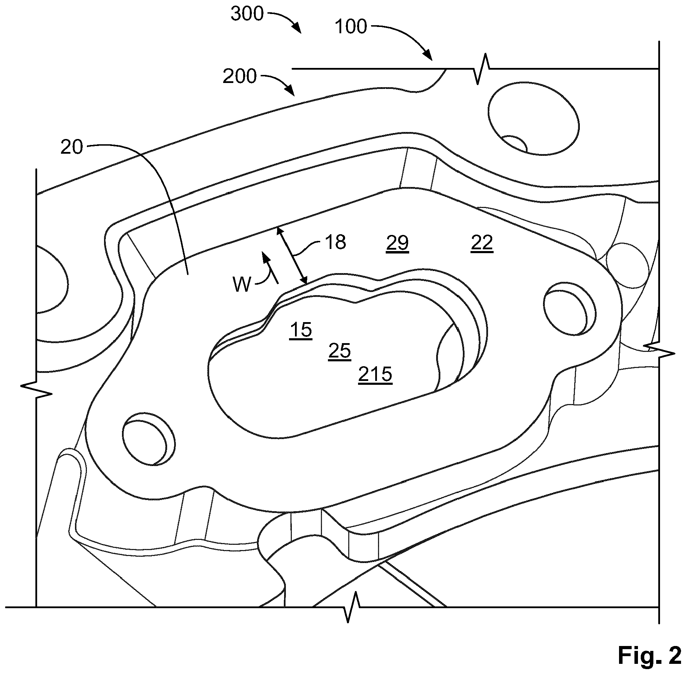

In Figs. 1 to 3, an embodiment of a sealing arrangement 100 is shown. The sealing arrangement 100 is used to seal a part 200 at a sealing surface 210 thereof, for example when a connector 50 is attached.

If the connector 50 would be attached without the sealing arrangement 100, a seal 40 of the connector 50 would be in direct contact with the sealing surface 210. Such a connection would, however, start leaking under certain repeated environmental conditions, which can be simulated by standardized tests, for example in a salt spray test in which salt water is repeatedly sprayed onto the connection. This problem is pronounced when certain materials are used for the sealing surface 210 and/or the part 200, for example aluminium or an aluminium alloy.

The sealing arrangement 100 helps to keep the connection tight even under difficult conditions.

The sealing arrangement 100 comprises an adhesive member 10 and a seal contacting plate 20, wherein the seal contacting plate 20 is adapted to be sealingly attached to the sealing surface 210 by the adhesive member 10. In Fig. 1, the adhesive member 10 is attached to the nonvisible side of the seal contacting plate 20. The combination of the adhesive member 10 and the seal contacting plate 20 is then attached to the sealing surface 210 of the part 200.

The adhesive member 10 thus has a dual function. On the one hand, it attaches the seal contacting plate 20 to the sealing surface 210. On the other hand, it provides a sealing function between the seal contacting plate 20 and the sealing surface 210.

A front surface 22 of the seal contacting plate 20 faces in the mounted state in the same direction as the sealing surface 210 of the part 200. The front surface 22 can thus replace the sealing surface 210. The front surface 22 can have better physical properties than the sealing surface 210. For example, the front surface 22 can be smoother and/or can expose a different material that is less prone to corrosion. The seal contacting plate 20 can be made from a corrosion resistant material, for example stainless steel or a plastic material.

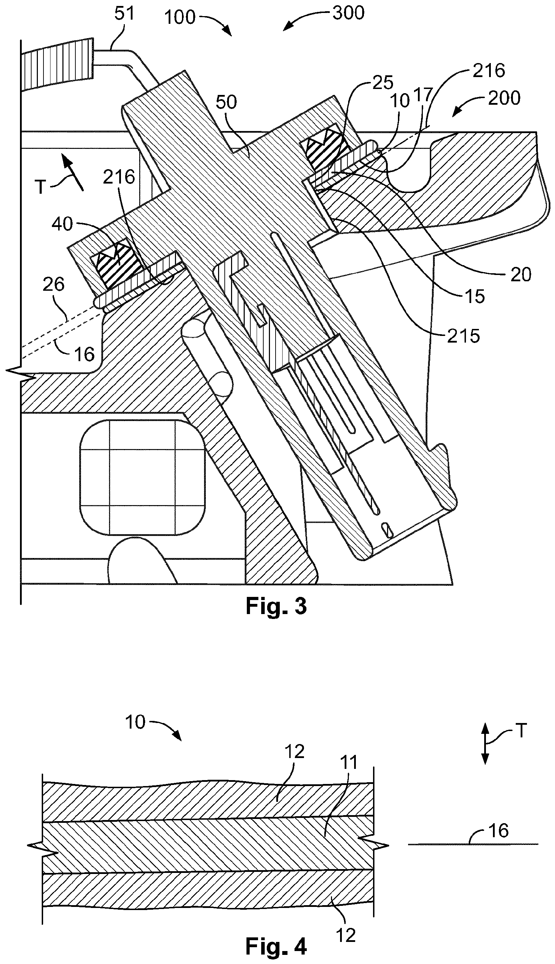

As can for example be seen in Fig. 4, the adhesive member 10 can comprise a flexible carrier structure 11. The flexible carrier structure 11 can for example comprise a film made from a plastic material or other flexible structures like paper or thin metal foils. On both sides of the flat and planar flexible carrier structure 11, adhesive 12 is located. The adhesive 12 can be gel-like and for example be curable. For example, the adhesive can harden when the seal contacting plate 20 has been attached to the sealing surface 210. Thus, a rough surface can be sealed properly and permanently.

The adhesive member 10 can in particular comprise or be a double-sided adhesive tape 17 that can, for example, be readily available on the market.

The seal contacting plate 20 can, in particular, comprise a sheet metal 21. Advantageously, the seal contacting plate 20 can then be produced by punching or stamping. This can, in particular, be done when the sheet metal is already attached to a strip-shaped tape that later forms the adhesive member 10. During the production, these two flat elements can be attached to each other and the combination of the seal contacting plate 20 and the adhesive member 10 can then be cut out from this combination.

In other embodiments, the adhesive member 10 can be applied to the sealing surface 210 of the part 200 first. In a subsequent step, the seal contacting plate 20 can then be attached.

The seal contacting plate 20 forms a frame 29 and has a closed frame structure that surrounds an opening 25. This opening 25 is aligned with an opening 15 in the adhesive member 10 and in the mounted state also aligned with an opening 215 on the part 200. This opening can allow the connector 50 to protrude into the part 200.

A plane 16 of the adhesive member is parallel to a plane 26 of the seal contacting plate 20 and the plane 216 of the sealing surface 200 in the mounted state in order to achieve a compact configuration. In the mounted state, an adhesive surface of the adhesive member 10 faces in a direction perpendicular to the plane 16 of the opening 15.

The adhesive member 10 can be compressible, in particular elastically compressible, for example in a thickness direction T that is perpendicular to the plane 16 of the adhesive member 10. This increases the sealing effect.

The adhesive member can have a width 18 in a width direction W lying in the plane 16, the width 18 being greater than a size of cavities or casting voids in the part 200. Preferably, the width 18 is at least three, especially five times greater than this width. By this, the cavity cannot have a negative influence on the sealing performance.

### REFERENCE NUMERALS

- 10: adhesive member
- 11: carrier structure
- 12: adhesive
- 15: opening
- 16: plane
- 17: double-sided adhesive tape
- 18: width
- 20: seal contacting plate
- 21: sheet metal
- 22: front surface
- 25: opening
- 26: plane
- 29: frame
- 40: seal
- 50: connector
- 51: cable
- 100: sealing arrangement
- 200: part
- 210: sealing surface
- 215: opening
- 216: plane
- 300: sealing assembly
- T: thickness direction
- W: width direction

## Claims

1. Sealing arrangement (100) for sealing a part (200) with a sealing surface (210), in particular an aluminium surface, the sealing arrangement (100) comprising an adhesive member (10) and a seal contacting plate (20), wherein the seal contacting plate (20) is adapted to be sealingly attached to the sealing surface (210) by the adhesive member (10).

2. Sealing arrangement (100) according to claim 1, wherein the adhesive member (10) comprises a flexible carrier structure (11).

3. Sealing arrangement (100) according to claim 2, wherein the flexible carrier structure (11) is planar.

4. Sealing arrangement (100) according to one of claims 1 to 3, wherein the adhesive member (10) comprises a double-sided adhesive tape (17).

5. Sealing arrangement (100) according to one of claims 1 to 4, wherein the seal contacting plate (20) is made from a corrosion resistant material.

6. Sealing arrangement (100) according to one of claims 1 to 5, wherein the seal contacting plate (20) comprises a sheet metal (21).

7. Sealing arrangement (100) according to one of claims 1 to 6, wherein the seal contacting plate (20) surrounds an opening (25).

8. Sealing arrangement (100) according to one of claims 1 to 7, wherein an adhesive surface of the adhesive member (10) faces in a direction (T) perpendicular to a plane (16) of the opening (15).

9. Sealing arrangement (100) according to one of claims 1 to 8, wherein the adhesive member (10) is compressible.

10. Sealing assembly (300), comprising the sealing arrangement (100) according to one of claims 1 to 9 and the part (200) with the sealing surface (210), wherein the sealing surface (210) comprises cavities, wherein the adhesive member (10) has a width (18) that is greater than the cavities.

11. Method of sealing a sealing surface (210) of a part (200), in particular an aluminium surface, comprising the step of applying a seal contacting plate (20) with an adhesive member (10) to the sealing surface (210).

12. Method according to claim 11, wherein the adhesive member (10) is applied to the seal contacting plate (20) before the seal contacting plate (20) is applied to the sealing surface (210).

13. Method according to claim 11 or 12, wherein the adhesive member (10) is applied to a sheet metal (21) and the seal contacting plate (20) is cut from the sheet metal (21).
